# NEUE EUROPÄISCHE PATENTSCHRIFT

(11) **EP 1 796 454 B2**
(45) Veröffentlichungstag und Bekanntmachung des Hinweises auf die Entscheidung über den Einspruch: **07.03.2012**
(45) Hinweis auf die Patenterteilung: 10.09.2008
(21) Anmeldenummer: 06704260.6
(22) Anmeldetag: 20.01.2006
(51) Int. Cl.: A01D 41/14

(54) **ERNTEGERÄT, INSBESONDERE ERNTEVORSATZ FÜR LANDWIRTSCHAFTLICHE ERNTEMASCHINEN ZUM AUFNEHMEN UND WEITERFÖRDERN VON HALMFRÜCHTEN**
HARVESTING EQUIPMENT, IN PARTICULAR HARVESTING ATTACHMENT FOR AGRICULTURAL HARVESTING MACHINES USED TO GATHER AND TRANSPORT CEREALS
APPAREIL DE RECOLTE, EN PARTICULIER ACCESSOIRE DE RECOLTE POUR DES MACHINES DE RECOLTE AGRICOLES, SERVANT A CUEILLIR ET TRANSPORTER DES CEREALES

(30) Priorität: 29.01.2005 DE 102005004211
(43) Veröffentlichungstag der Anmeldung: 20.06.2007
(73) Patentinhaber: Maschinenfabrik Kemper GmbH & Co. KG, 48973 Stadtlohn (DE)
(72) Erfinder: RICKERT, Clemens, 48703 Stadtlohn (DE); HÜNING, Martin, 48727 Billerbeck (DE); SCHULZE HOCKENBECK, Leo, 48351 Everswinkel (DE); WEITENBERG, Klemens, 46325 Borken (DE)
(74) Vertreter: Holst, Sönke
(86) Internationale Anmeldenummer: PCT/EP2006/050344
(87) Internationale Veröffentlichungsnummer: WO 2006/079609

(56) Entgegenhaltungen:
- EP-A- 1 685 755
- EP-A- 1 685 756
- EP-A1- 0 056 118
- EP-A1- 1 685 755
- DE-A-102004 022 534
- DE-A1- 4 030 066
- DE-A1- 19 523 255
- DE-A1- 19 523 255
- FR-A- 2 814 324
- US-A- 4 355 690
- US-A- 5 934 382

## Beschreibung

Die Erfindung betrifft ein Erntegerät, insbesondere einen Erntevorsatz für landwirtschaftliche Erntemaschinen zum Aufnehmen und Weiterfördern von Halmfrüchten, beispielsweise Maispflanzen, das beim Erntebetrieb in einer Vorwärtsrichtung über ein Feld bewegbar ist, mit einem Mittelteil, einem ersten Seitenteil und einem zweiten Seitenteil, die an je einer Seite des Mittelteils um eine erste bzw. zweite, sich horizontal und in der Vorwärtsrichtung erstreckende Achse angelenkt und durch Antriebe zwischen einer Arbeitsstellung und einer Transportstellung schwenkbar sind, wobei der Mittelteil und die Seitenteile in der Arbeitsstellung nebeneinander angeordnete Mäh- und Förderelemente umfassen und Mäh- und Förderelemente der Seitenteile sich in der Transportstellung oberhalb von Mäh- und Förderelementen des Mittelteils befinden.

Während von der Landmaschinenindustrie derzeit immer breitere Erntevorsätze für selbst fahrende Erntemaschinen angeboten werden, die es dem Landwirt ermöglichen, ein Feld in kürzerer Zeit und mit weniger Überfahrungen abzuernten, ist die maximale Breite von Fahrzeugen beim Befahren einer Straße gesetzlich beschränkt. Die Erntevorsätze werden deshalb in der Regel auf einem Anhänger transportiert oder in eine Transportstellung eingeklappt, in der ihre Breite gegenüber ihrer Betriebsposition vermindert ist. Das Einklappen hat den Vorteil, dass ein Abnehmen und Wiederanbringen des Erntevorsatzes von bzw. an der Erntemaschine zum Transport auf einem Anhänger entfällt.

In der DE 41 31 491 A wird ein Maiserntegerät für Feldhäcksler beschrieben, bei dem die Außenteile um horizontale, in Vorwärtsrichtung verlaufende Achsen hochklappbar sind. Gemäß der EP 0 491 405 A werden die Seitenteile um horizontale, in Vorwärtsrichtung verlaufende Achsen verschwenkt und horizontal über das Mittelteil gelegt, während in der DE 298 17 666 U vorgeschlagen wird, bei einem fünfteiligen Erntevorsatz die inneren Seitenteile in der Transportstellung vertikal nach oben zu schwenken und die äußeren Seitenteile demgegenüber wieder nach innen zu drehen, so dass die äußeren Seitenteile oberhalb der Mittelteile angeordnet sind.

In der als gattungsbildend angesehenen DE 195 23 255 A wird vorgeschlagen, die Seitenteile an in der Mitte des Mittelteils angelenkten Tragarmen zu befestigen. Nach dem Anheben der Tragarme werden die Seitenteile um am Ende der Tragarme angeordnete Schwenkachsen um etwa 90° nach vorn verschwenkt. Da die jeweiligen Schwenkachsen der Seitenteile an den Tragarmen unterschiedlich orientiert sind, liegen in der Transportstellung die im Arbeitsbetrieb vorderen Bereiche der Seitenteile übereinander.

Während bei den Ausführungsformen nach DE 195 23 255 A und DE 298 17 666 U relativ aufwändige Schwenkmechanismen verwendet werden, die für jeden Seitenteil zwei Schwenkachsen und zugehörige Antriebe benötigen, ist bei der Ausführungsform nach EP 0 491 405 A als nachteilig anzusehen, dass die Breite der Seitenteile auf die Hälfte der Breite des Mittelteils begrenzt ist. Derzeit kann daher mit einem derartigen Erntevorsatz eine Breite von ca. 6 bis 7 m nicht überschritten werden. Die hoch aufragenden Seitenteile der Ausführungsform nach DE 41 31 491 A führen zu einem hoch liegenden Schwerpunkt des Erntevorsatzes in der Transportposition, die zu einem ungünstigen Fahrverhalten der Erntemaschine führt.

Die US 4 355 690 A beschreibt ein dreiteiliges Bodenbearbeitungsgerät, bei dem in einer Transportposition ein erstes Seitenteil oberhalb eines Mittelteils abgelegt wird, und das zweite Seitenteil wiederum oberhalb des ersten Seitenteils liegt. Die Seitenteile sind um in Vorwärtsrichtung und horizontal verlaufende Schwenkachsen schwenkbar am Mittelteil angelenkt, wobei die Schwenkachse des ersten Seitenteils niedriger als die des zweiten Seitenteils liegt. Die Verschwenkung beider Seitenteile erfolgt beim Übergang in die Transportposition über einen Winkelbereich aus der Horizontalen bis in eine mittels eines Sensors erfasste Position von 5° mit für beide Seitenteile gleicher Geschwindigkeit. Danach wird das zweite Seitenteil langsamer als das erste Seitenteil angetrieben. Beim Auseinanderfalten werden beide Seitenteile mit etwa derselben Geschwindigkeit angetrieben.

Die nachveröffentlichten Druckschriften DE 10 2004 022 534 A, EP 1 685 755 A und EP 1 685 756 A beschreiben jeweils dreiteilige Erntevorsätze, bei denen ein erstes Seitenteil horizontal über ein Mittelteil geschwenkt wird und dann das zweite Seitenteil horizontal über das erste Seitenteil gelegt wird. Eine selbsttätige Steuerung der Antriebe der Seitenteile wird nicht offenbart.

Die der Erfindung zu Grunde liegende Aufgabe wird darin gesehen, einen demgegenüber verbesserten Erntevorsatz bereitzustellen.

Diese Aufgabe wird erfindungsgemäß durch die Lehre des Patentanspruchs 1 gelöst, wobei in dem weiteren Patentanspruch Merkmale aufgeführt sind, die die Lösung in vorteilhafter Weise weiterentwickeln.

Ein Erntegerät umfasst einen Mittelteil und an dessen Seiten um horizontal und in Vorwärtsrichtung verlaufende Achsen schwenkbar angelenkte Seitenteile. Es wird vorgeschlagen, die erste Achse, um die der erste Seitenteil schwenkbar ist, in einer Höhe oberhalb des Mittelteils anzuordnen, die es ermöglicht, den ersten Seitenteil in der Transportstellung flach auf den Mittelteil zu legen. Der zweite Seitenteil ist um eine gegenüber der ersten Achse höher angeordnete zweite Achse schwenkbar am Mittelteil angelenkt. Dadurch wird es möglich, den zweiten Seitenteil in der Transportstellung flach auf den nach innen verschwenkten ersten Seitenteil zu legen. Die Antriebe sind mit einer Steuerung verbunden, die die Antriebe basierend auf die Position der Seitenteile erfassenden Sensoren in Form von Schaltern oder derart ansteuert, dass beim Übergang von der Arbeitsstellung in die Transportstellung zunächst der erste Antrieb aktiviert wird, bis der erste Seitenteil die Transportstellung erreicht hat oder zumindest so weit verschwenkt ist, dass keine Kollision mit dem zweiten Seitenteil möglich ist, und dann der Antrieb des zweiten Seitenteils aktiviert wird, und die Rückbewegung in umgekehrter Reihenfolge erfolgt.

Auf diese Weise erreicht man mit relativ einfachen Mitteln eine Arbeitsbreite, die dem Dreifachen der Transportbreite des Erntevorsatzes entspricht.

Die Erfindung eignet sich für alle Arten von Erntevorsätzen, wie Maisgebissen, Maispflückern und Schneidwerken, die an Erntemaschinen insbesondere in Form von selbst fahrenden oder angebauten oder gezogenen Feldhäckslern oder Mähdreschern Verwendung finden können. Eine Förderung des Ernteguts in die Erntemaschine ist nicht zwingend erforderlich, so dass die Erfindung beispielsweise auch an Trägerfahrzeugen mit Mähgeräten in Form von Mähkreiseln oder Mähscheiben oder dgl. zum Schneiden von Gras mit verschwenkbaren Seitenteilen Anwendung finden kann. Die Seitenteile müssen demnach auch nicht unbedingt direkt am Mittelteil angelenkt sein, sondern können sich an beliebiger anderer Stelle des Trägerfahrzeugs schwenkbar abstützen.

In der Zeichnung ist ein nachfolgend näher beschriebenes Ausführungsbeispiel der Erfindung dargestellt. Es zeigt:
- Fig. 1: eine Draufsicht auf eine selbst fahrende Erntemaschine mit einem daran angeordneten Erntevorsatz,
- Fig. 2: eine Frontansicht des Erntevorsatzes in der Arbeitsstellung,
- Fig. 3: eine Frontansicht des Erntevorsatzes in der Transportstellung, und
- Fig. 4: eine Seitenansicht der Erntemaschine und des Erntevorsatzes in der Transportstellung.

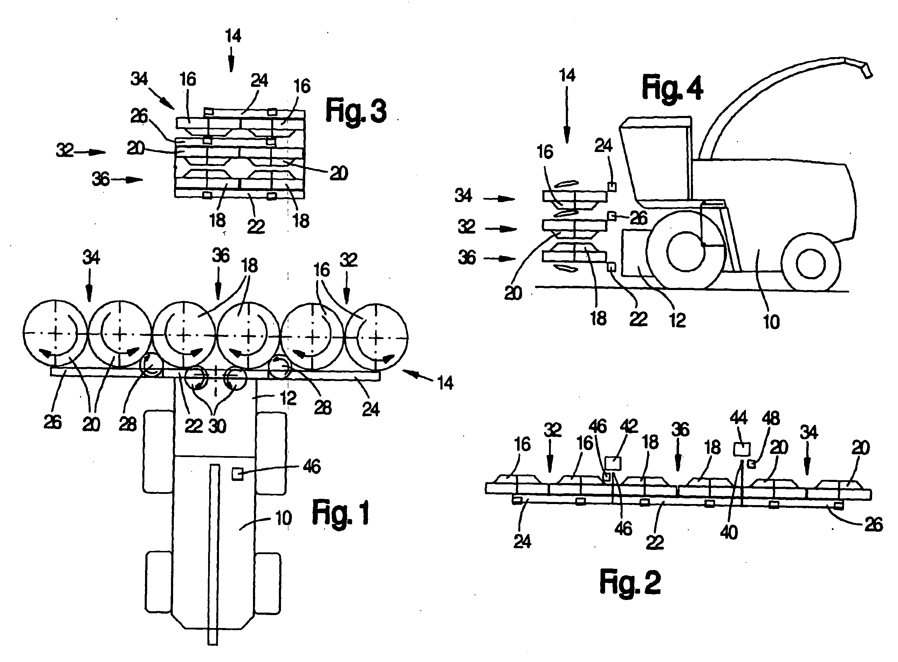

In der Figur 1 ist eine Draufsicht auf eine selbst fahrende Erntemaschine 10 in Form eines an sich bekannten Feldhäckslers mit einem am Einzugskanal 12 der Erntemaschine 10 lösbar angebrachten Erntevorsatz 14 wiedergegeben. Der hier als Ausführungsform für ein Erntegerät beispielhaft dargestellte Erntevorsatz 14 ist in Form einer Mähmaschine ausgebildet und umfasst sechs nebeneinander angeordnete Mäh- und Förderelemente 16, 18, 20 zum Abschneiden und Einziehen stängelartigen Ernteguts, wie Mais. Da es sich hier nur um ein Ausführungsbeispiel handelt, könnten auch beliebige andere Anzahlen an und Ausführungsformen von Mäh- und Förderelementen 16, 18, 20 Verwendung finden, insbesondere mit Endlosförderern.

Der Erntevorsatz 14 umfasst einen Tragrahmen, der sich aus einem Mittelabschnitt 22 und zwei daran an beiden Seiten angeordneten äußeren Abschnitten 24, 26 zusammensetzt. Die äußeren Abschnitte 24, 26 des Tragrahmens tragen jeweils zwei Mäh- und Förderelemente 16 bzw. 20, während der Mittelabschnitt 22 des Tragrahmens die mittleren Mäh- und Förderelemente 18 trägt.

Das im Erntebetrieb von den um die Hochachse rotierenden, durch einen Antriebsstrang von der Erntemaschine 10 her angetriebenen Mäh- und Förderelementen 16, 18, 20 vom Boden abgetrennte Erntematerial wird an ihren Rückseiten im Zusammenwirken mit an den äußeren Abschnitten 24, 26 des Tragrahmens angebrachten Querfördertrommeln 28 und am Mittelabschnitt 22 angebrachten Schrägfördertrommeln 30 in den Einzugskanal 12 der Erntemaschine 10 gefördert, von der es gehäckselt und auf ein Transportfahrzeug ausgeworfen wird.

Der in Vorwärtsrichtung der Erntemaschine 10 rechte äußere Abschnitt 24 des Tragrahmens bildet mit den daran befestigten Mäh- und Förderelementen 16 und der zugehörigen Querfördertrommel 28 einen ersten Seitenteil 32 des Erntevorsatzes 14. Der in Vorwärtsrichtung der Erntemaschine 10 linke äußere Abschnitt 26 des Tragrahmens bildet mit den daran befestigten Mäh- und Förderelementen 20 und der zugehörigen Querfördertrommel 28 einen zweiten Seitenteil 34 des Erntevorsatzes 14. Der Mittelabschnitt 22 des Tragrahmens bildet mit den daran befestigten Mäh- und Förderelementen 18 und den zugehörigen Schrägfördertrommeln 30 einen Mittelteil 36 des Erntevorsatzes 14. In der in den Figuren 1 und 2 dargestellten Arbeitsstellung sind die Seitenteile 32, 34 demnach in Vorwärtsrichtung in einer Ebene seitlich neben dem Mittelteil 36 angeordnet.

Um die Breite des Erntevorsatzes 14 zum Transport auf einer Straße zu verringern und somit ein Abnehmen und anschließendes Wiederanbringen des Erntevorsatzes 14 von der Erntemaschine 10 zu ersparen, ist der Erntevorsatz 14 in eine in den Figuren 3 und 4 gezeigte Transportposition verbringbar. Die Position des Mittelteils 36 relativ zum Einzugskanal 12 verändert sich in der Transportposition gegenüber der Arbeitsposition nicht. Der erste Seitenteil 32 ist um eine sich horizontal und in Vorwärtsrichtung erstreckende erste Achse 38 schwenkbar am Mittelabschnitt 22 des Mittelteils 36 angelenkt, während der zweite Seitenteil 34 um eine sich horizontal und in Vorwärtsrichtung erstreckende zweite Achse 40 schwenkbar am Mittelabschnitt 22 des Mittelteils 36 angelenkt ist. Die erste Achse 38 ist oberhalb des Abschnitts 24 des Tragrahmens angeordnet, und die zweite Achse 40 ist höher als die erste Achse 38 oberhalb des Abschnitts 26 angeordnet. Zugehörige Antriebe 42, 44 sind eingerichtet, die Seitenteile 32 bzw. 34 um die Achsen 38 bzw. 40 in die Transportposition zu verschwenken. Die Antriebe 42, 44 können Rotationsantriebe sein, z. B. Hydraulikmotore, oder Linearantriebe, z. B. Hydraulikzylinder, die über geeignete Antriebsstränge mit den Seitenteilen 32, 34 verbunden sind, wie Seilzüge oder an sich bekannte Gestänge (s. DE 33 24 458 A und US 4 355 690 A.

Die erste Achse 38 ist derart angeordnet, dass der erste Seitenteil 32 in der Transportposition um 180° nach innen geschwenkt ist und flach und horizontal oberhalb des Mittelteils 36 liegt. Die zweite Achse 40 ist analog derart angeordnet, dass der zweite Seitenteil 34 in der Transportposition um 180° nach innen geschwenkt ist und flach und horizontal oberhalb des ersten Seitenteils 32 liegt. Man erhält somit eine Reduzierung der Transportbreite auf ein Drittel der Arbeitsbreite. Zur Entlastung der Antriebe 42, 44 kann sich in der Transportstellung der erste Seitenteil 32 auf dem Mittelteil 36 und der zweite Seitenteil 34 auf dem ersten Seitenteil 32 und/oder dem Mittelteil 36 abstützen. Weiterhin ist eine Verriegelung der Seitenteile 32, 34 in der Transportstellung und/oder Arbeitsstellung sinnvoll.

Die Antriebe 42, 44 sind mit einer Steuerung 46 verbunden, die sich an Bord der Erntemaschine 10 oder auf dem Erntevorsatz 14 befinden kann. Die Steuerung 46 ist betreibbar, beim Übergang von der Arbeitsstellung in die Transportstellung zunächst den ersten Seitenteil 32 zu verschwenken, bis er so weit verschwenkt ist, dass keine Kollision mit dem zweiten Seitenteil 34 möglich ist. Eine Erfassung dieser Position erfolgt durch einen Sensor 46, der die Position des ersten Seitenteils 32 erkennt, nämlich durch einen beim Erreichen der genannten Position vom ersten Seitenteil 32 betätigten Schalter oder ein vom ersten Seitenteil 32 bewegtes Potentiometer. Zusätzlich kann die Betriebszeit des Antriebs 42 des ersten Seitenteils 32 erfasst werden, und ein Freigabesignal für den Antrieb 44 des zweiten Seitenteils 34 gegeben, sobald eine Zeitspanne abgelaufen ist, die zum Erreichen der erwähnten Position des ersten Seitenteils 32 hinreicht. Dann wird der Antrieb 44 des zweiten Seitenteils 34 aktiviert. Die Rückbewegung erfolgt in umgekehrter Reihenfolge, wobei analog der Antrieb 42 des ersten Seitenteils 32 erst dann aktiviert wird, wenn ein Sensor 48 anzeigt, dass der zweite Seitenteil 34 eine Position erreicht hat, in der keine Kollision mit dem ersten Seitenteil 32 mehr möglich ist.

## Patentansprüche

1. Erntegerät, insbesondere Emtevorsatz (14) für landwirtschaftliche Erntemaschinen (10) zum Aufnehmen und Weiterfördern von Halmfrüchten, beispielsweise Maispflanzen, das beim Emtebetrieb in einer Vorwärtsrichtung über ein Feld bewegbar ist, mit einem Mittelteil (36), einem ersten Seitenteil (32) und einem zweiten Seitenteil (34), die an je einer Seite des Mittelteils (36) um eine erste bzw. zweite, sich horizontal und in der Vorwärtsrichtung erstreckende Achse (38, 40) angelenkt und durch Antriebe (42, 44) zwischen einer Arbeitsstellung und einer Transportstellung schwenkbar sind, wobei der Mittelteil (36) und die Seitenteile (32, 34) in der Arbeitsstellung seitlich nebeneinander angeordnete Mäh- und Förderelemente (16, 18, 20) umfassen und Mäh- und Förderelemente (16, 20) der Seitenteile (32, 34) sich in der Transportstellung oberhalb von Mäh- und Förderelementen (18) des Mittelteils (36) befinden, **dadurch gekennzeichnet, dass** die erste Achse (38) in einer ersten Höhe derart angeordnet ist, dass das erste Seitenteil (32) in der Transportstellung horizontal oberhalb des Mittelteils (36) angeordnet ist, dass die zweite Achse (40) in einer zweiten Höhe derart angeordnet ist, dass das zweite Seitenteil (36) in der Transportstellung horizontal oberhalb des ersten Seitenteils (32) angeordnet ist, und dass die Antriebe (42, 44) mit einer Steuerung (46) verbunden sind, die die Antriebe (42, 44) basierend auf die Position der Seitenteile (32, 34) erfassenden Sensoren (46, 48) derart ansteuern kann, dass beim Übergang von der Arbeitsstellung in die Transportstellung zunächst der erste Antrieb (42) aktiviert wird, bis der erste Seitenteil (32) so weit verschwenkt ist, dass keine Kollision mit dem zweiten Seitenteil (34) möglich ist, und dann der Antrieb (44) des zweiten Seitenteils (34) aktiviert wird, und die Rückbewegung in umgekehrter Reihenfolge erfolgt, wobei die Sensoren (46, 48) ein vom ersten Seitenteil (32) bewegtes Potentiometer oder einen Schalter umfassen, der vom ersten Seitenteil (32) betätigt wird, wenn der erste Seitenteil (32) so weit verschwenkt ist, dass keine Kollision mit dem zweiten Seitenteil (34) möglich ist.

2. Erntegerät nach Anspruch 1, **dadurch gekennzeichnet, dass** die Seitenteile (32, 34) etwa die Breite des Mittelteils (36) haben.

## Claims

1. Harvesting equipment, in particular harvesting header (14) for agricultural harvesting machines (10) for gathering and transporting cereals, for example maize plants, which harvesting attachment can be moved over a field in a forward direction during the harvesting operation, with a central part (36), a first side part (32) and a second side part (34) which are articulated on either side of the central part (36) about a first and second axis (38, 40) extending horizontally and in the forward direction, and can be pivoted between a working position and a transport position by means of drives (42, 44), wherein, in the working position, the central part (36) and the side parts (32, 34) comprise mowing and conveying elements (16, 20) arranged laterally next to one another, and, in the transport position, mowing and conveying elements (16, 18, 20) of the side parts (32, 34) are located above mowing and conveying elements (18) of the central part (36), **characterized in that** the first axis (38) is arranged at a first height in such a manner that, in the transport position, the first side part (32) is arranged horizontally above the central part (36), **in that** the second axis (40) is arranged at a second height in such a manner that, in the transport position, the second side part (36) is arranged horizontally above the first side part (32), and **in that** the drives (42, 44) are connected to a controller (46) which can activate the drives (42, 44) on the basis of sensors (46, 48) detecting the position of the side parts (32, 34) such that, upon the transition from the working position into the transport position, the first drive (42) is first of all activated until the first side part (32) is pivoted to an extent such that no collision with the second side part (34) is possible, and then the drive (44) of the second part (34) is activated, and the return movement takes place in the opposite sequence, wherein the sensors (46, 48) comprise a potentiometer moved by the first side part (32) or a switch that is moved by the first side part (32) when the first side part (32) is pivoted so far that no collision with the second side part (34) is possible.

2. Harvesting equipment according to Claim 1, **characterized in that** the side parts (32, 34) have approximately the width of the central part (36).

## Revendications

1. Appareil de récolte, en particulier tête de récolte (14) pour des machines de récolte agricoles servant à cueillir et transporter des céréales, par exemple des plants de maïs, qui peut être déplacé lors de la récolte dans une direction d'avance dans un champ, comprenant une partie centrale (36), une première partie latérale (32) et une deuxième partie latérale (34), qui sont articulées de chaque côté de la partie centrale (36) autour d'un premier, respectivement deuxième axe (38, 40) s'étendant horizontalement et dans la direction d'avance et pouvant pivoter entre une position de travail et une position de transport par le biais d'entraînements (42, 44), la partie centrale (36) et les parties latérales (32, 34) comprenant des éléments de fauchage et de transport (16, 18, 20) disposés les uns à côté des autres latéralement dans la position de travail, et les éléments de fauchage et de transport (16, 20) des parties latérales (32, 34) se trouvant dans la position de transport au-dessus des éléments de fauchage et de transport (18) de la partie centrale (36), **caractérisé en ce que** le premier axe (38) est disposé à une première hauteur de telle sorte que la première partie latérale (32) soit disposée dans la position de transport horizontalement au-dessus de la partie centrale (36), **en ce que** le deuxième axe (40) est disposé à une deuxième hauteur de telle sorte que la deuxième partie latérale (36) soit disposée dans la position de transport horizontalement au-dessus de la première partie latérale (32), et **en ce que** les entraînements (42, 44) sont connectés à une commande (46) qui peut commander les entraînements (42, 44) sur la base de capteurs (46, 48) détectant la position des parties latérales (32, 34) de telle sorte que lors du transfert de la position de travail dans la position de transport, le premier entraînement (42) soit d'abord activé jusqu'à ce que la première partie latérale (32) soit pivotée dans une mesure telle qu'aucune collision avec la deuxième partie latérale (34) ne soit possible, et qu'ensuite l'entraînement (44) de la deuxième partie latérale (34) soit activé, et que le mouvement de retour s'effectue dans la séquence inverse, où les capteurs (46, 48) comprennent un potentiomètre agité par la première partie latérale (32) ou un commutateur agité par la première partie latérale (32) quand la première partie latérale (32) est pivotée aussi loin qu'une collision avec la deuxième partie latérale (34) n'est pas possible.

2. Appareil de récolte selon la revendication 1, **caractérisé en ce que** les parties latérales (32, 34) ont approximativement la largeur de la partie centrale (36).
